# EUROPEAN PATENT APPLICATION

(11) **EP 2 500 602 A1**
(43) Date of publication of application: **19.09.2012**
(21) Application number: 12156360.5
(22) Date of filing: 21.02.2012
(51) Int. Cl.: F16H 1/16, A01B 33/02

(54) **Power transmission mechanism**

(30) Priority: 18.03.2011 JP 2011061102
(71) Applicant: Makita Corporation, Anjo, Aichi 446-8502 (JP)
(72) Inventor: Naka, Shinsuke, Numazu-shi, Shizuoka 410-8535 (JP)
(74) Representative: Richter Werdermann Gerbaulet Hofmann

(57) **Abstract**

A power transmission mechanism (1) includes a worm gear mechanism (27) including a worm wheel (11) and a worm gear (9b); a shaft (9) extending in a vertical direction and having the worm gear (9b) in a lower part; a first gear (7) located in an upper direction of the shaft (9); and a second gear (5a) configured to be able to engage with the first gear (7) and connect to a shaft of a prime mover (103).

## Description

### BACKGROUND

### Field of the Invention

The present invention relates to a power transmission mechanism configured to transmit the power from a prime mover such as an electric motor and an engine via a first gear, a second gear and a worm gear mechanism. This power transmission mechanism is used in a work machine such as a cultivator.

### Description of the Related Art

A power transmission mechanism for a cultivator using a prime mover such as an engine is disclosed in, for example, Japanese Patent Application Laid-Open Publication No.2008-307022 (Patent Literature 1), Japanese translation of PCT international application No.HEl10-508740 (Patent Literature 2), Japanese Patent Application Laid-Open Publication No. 2003-220982 (Patent Literature 3), and Japanese Patent Application Laid-Open Publication No.SHO59-210803 (Patent Literature 4).

However, with the methods disclosed in the above-mentioned patent literatures, there is a problem that the power transmission mechanism is dedicated to a specific prime mover, and, if the prime mover is replaced, the power transmission mechanism is not applicable to replacement prime movers.

### SUMMARY

It is therefore an object of the present invention to provide a power transmission mechanism applicable to replacement prime movers.

According to a first aspect of the present invention, a power transmission mechanism include: a worm gear mechanism including a worm wheel and a worm gear; a shaft extending in a vertical direction and having the worm gear in a lower part; a first gear located in an upper direction of the shaft; and a second gear configured to be able to engage with the first gear and connect to a shaft of a prime mover.

According to a second aspect of the present invention, with respect to the shaft, the second gear is arranged in a same side as a side in which the worm wheel is formed.

According to a third aspect of the present invention, the power transmission mechanism further includes: a first accommodation space to accommodate the first gear and the second gear; and a second accommodation space to accommodate the worm gear mechanism. A penetrating path configured to penetrate the first accommodation space and the second accommodation space and contain the shaft, is formed in the first accommodation space in the first gear side; and there is no penetrating structure configured to penetrate the first accommodation space and the second accommodation space in the first accommodation space in the second gear side.

According to a fourth aspect of the present invention, the power transmission mechanism further includes a cover part removably formed on the first accommodation space. At least the first gear is configured to be removable in a direction of the cover part.

The present invention can provide a power transmission mechanism applicable to replacement prime movers. With the present invention, while a prime mover can be replaced, the other body parts of a working machine can be used as is.

### BRIEF DESCRIPTION OF THE DRAWINGS

Fig. 1 is an exemplary drawing explaining use of a power transmission mechanism 1 according to an embodiment of the present invention;
Fig. 2 is an exemplary front view showing a cultivator shown in Fig. 1;
Fig. 3 is an exemplary cross-sectional view showing the power transmission mechanism 1 from the right side; and
Fig. 4 is an exemplary drawing showing one scene in which the cultivator is used.

### DETAILED DESCRIPTION

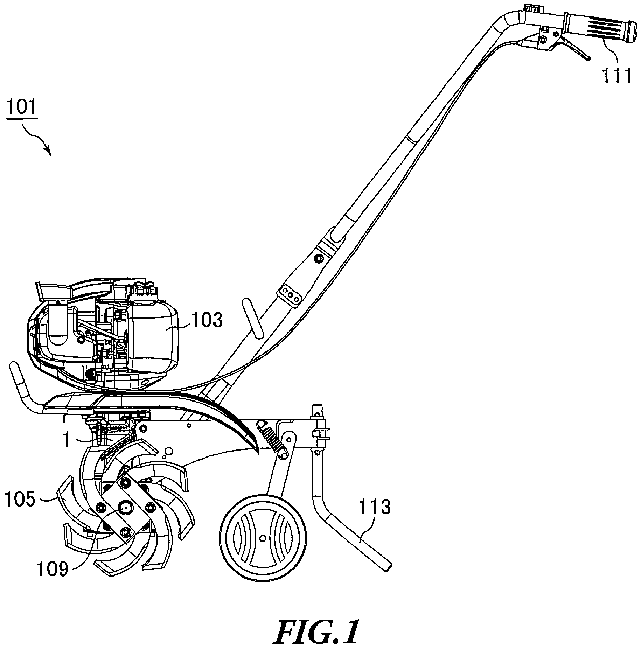

Fig. 1 is an exemplary drawing explaining use of a power transmission mechanism 1 according to an embodiment of the present invention.

Now, an embodiment of the present invention will be described in detail with reference to Fig. 1. As shown in Fig. 1, the power transmission mechanism 1 is used in a cultivator 101 having a prime mover (engine) 103. Here, the power transmission mechanism 1 may be used in not only the cultivator 101 but also other working machines, working tools and so forth. This power transmission mechanism 1 transmits the torque inputted from the prime mover (engine) 103 to a rotary shaft 109 to which a tillage tine 105 is connected.

The cultivator 101 is operated by an operating part 111. The cultivator 101 has a stopper 113. During work, the stopper 113 is stuck into ground G to prevent the cultivator 101 from traveling and adjust the depth to which the ground G is cultivated.

A direction in which the cultivator 101 travels during normal work is defined as "forward direction (the left side in Fig. 1)," and the opposite direction is defined as "backward direction (the right side in Fig. 1)." In addition, a direction in which a prime mover (engine) 103 is located with respect to a tillage tine 105 is defined as "upper direction (the upper direction in Fig. 1)" and the opposite direction is defined as "lower direction (the lower direction in Fig. 1)." Then, with respect to the forward direction, the left side is defined as "left side (the front in Fig. 1)" and the opposite side is defined as "right side (the back in Fig. 1)."

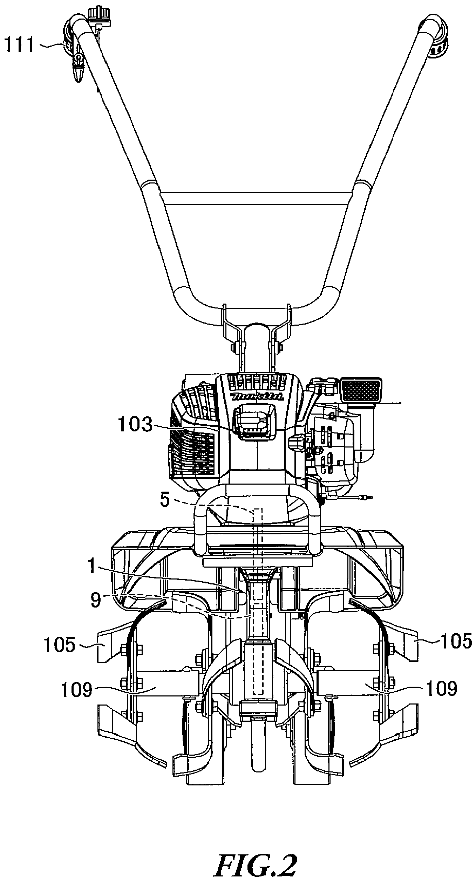

Fig. 2 is an exemplary front view showing a cultivator 101 shown in Fig. 1.

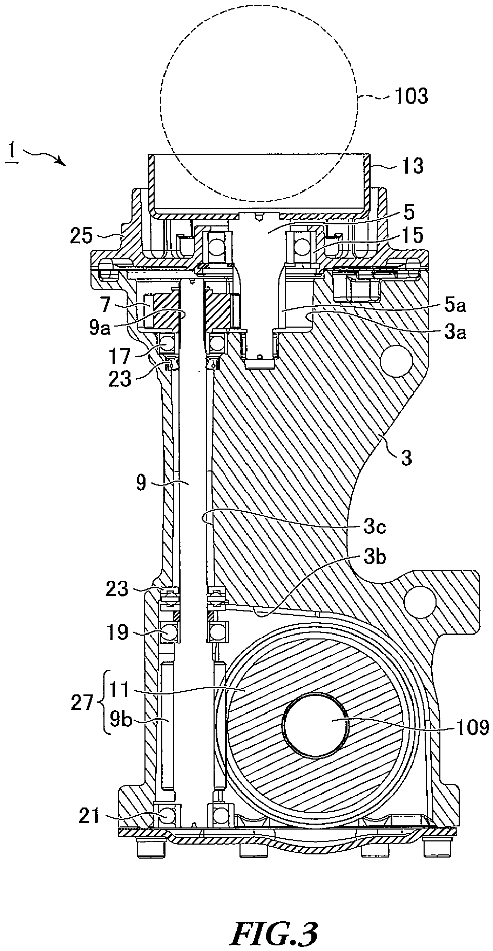

As shown in Fig. 2, a prime mover side input shaft 5 that outputs power from the prime mover 103 extends in the vertical direction, and a shaft 9 also extends in the vertical direction (see also Fig. 3). The prime mover side input shaft 5 and the shaft 9 is formed in the power transmission mechanism 1. As shown in Fig. 2, the power transmission mechanism 1 changes the rotation of the prime mover side input shaft 5 and the shaft 9 about the vertical axis, to the rotation of a rotor shaft 109 about the horizontal axis. The tillage tine 105 is connected to the rotor shaft 109. The cultivator 101 is operated by an operating part 111.

Fig. 3 is an exemplary cross-sectional view showing the power transmission mechanism 1 from the left side.

The power transmission mechanism 1 has a body part 3. This body part 3 includes a first accommodation space 3a located in the upper part and a second accommodation space 3b located in the lower part. A penetrating path 3c configured to penetrate the first accommodation space 3a and the second accommodation space 3b is formed in a position in the forward direction. A cover part 25 that covers the first accommodation space 3a is formed above the first accommodation space 3a. This cover part 25 is connected to the body part 3 to make a state in which there is no opening in the first accommodation space 3a.

A first gear 7, and a second gear 5a formed in the prime mover side input shaft 5 are accommodated in the first accommodation space 3a. The first gear 7 and the second gear 5a engage with one another. The second gear 5a is provided behind the first gear 7. As a result, the prime mover side input shaft 5 is provided also behind the shaft 9, and therefore the center of gravity of the prime mover 103 is brought more back than in a case in which prime mover 103 is directly connected to the shaft 9. That is, the second gear 5a is configured to be able to connect to the prime mover side input shaft 5 of the prime mover 103, and arranged in the same side as the side in which the worm wheel 11 is formed, with respect to the shaft 9. In addition, the first gear 7 and the second gear 5a control the transmission gear ratio such that the number of rotations of the shaft 9 is about 1/2 of the number of rotations of the prime mover side input shaft 5. Here, this transmission gear ratio is not limited to 1/2, of course. A worm gear mechanism 27 is accommodated in the second accommodation space 3b. A shaft 9 that penetrates the first accommodation space 3a and the second accommodation space 3b lies in the penetrating path 3c.

Input shaft bearings 15 that hold the prime mover side input shaft 5 are formed in the cover part 25. A clutch plate 13 is connected to the input shaft bearings 15. Then, the prime mover 103 is connected to the power transmission mechanism 1 via the clutch plate 13. Here, when the prime mover 103 is an electric motor, the clutch plate 103 is not always required. The prime mover side input shaft 5 is integrally formed with the second gear 5a. However, the second gear 5a is not necessarily integrally formed with the prime mover side shaft 5, but the second gear 5a and the prime mover side input shaft 5 may be formed separately and connected with one another.

The first gear 7 engages with a spline 9a formed in the upper part of the shaft 9. This coupling is made such that the first gear 7 can be taken out from the cover part 25 side.

First gear side bearings 17 are arranged in the penetrating path 3c in the first accommodation space 3a. Meanwhile, thrust bearings 23 are arranged in the penetrating path 3c in the second accommodation space 3b side. These thrust bearings 23 are configured to receive a thrust load generated in the shaft 9. Worm gear side first bearings 19 are arranged in the upper part of the second accommodation space 3b, and worm gear side second bearings 21 are arranged in the lower part of the second accommodation space 3b.

The worm gear mechanism 27 accommodated in the second accommodation space 3b includes the worm wheel 11 and the worm gear 9b formed on the shaft 9. The worm gear 9b is formed on the lower part of the shaft 9. The worm wheel 11 is connected to the rotor shaft 109 extending to the right side and the left side. This worm gear mechanism 27 changes the torque about the vertical axis to the torque about the horizontal axis. The worm gear 9b and the worm wheel 11 control the transmission gear ratio such that the number of rotations of the rotor shaft 109 is about 1/35 of the number of rotations of the shaft 9. Here, this transmission gear ratio is not limited to 1/35, of course. As a result, the number of rotations of the rotor shaft 109 is 1/70 of the prime mover 103.

The worm gear side first bearings 19 are arranged above the worm gear 9b, and the worm gear side second bearings 21 are arranged below the worm gear 9b. The thrust bearings 23 are arranged above the worm gear side first bearings 19. The shaft 9 is rotatably held by the first gear side bearings 17, the thrust bearings 23, the worm gear side first bearings 19 and the worm gear side second bearings 21.

The above-described configuration provides the following possibilities. First, the cover part 25 can be removed. Then, when the cover part 25 is removed, the input shaft bearings 15, the prime mover side input shaft 5, the second gear 5a formed in the prime mover side input shaft 5, the crutch plate 13 and the prime mover (engine) 103 are removed together. In this way, when the cover part 25 is removed, the first gear 7 is exposed. Therefore, the user can replace the first gear 7. As described above, with the present embodiment, a configuration is adopted where, by removing the cover part 25, it is possible to replace the input shaft bearings 15, the prime mover side input shaft 5, the clutch plate 13, the prime mover (engine) 103, the second gear 5a and the first gear 7.

Here, it is preferred that the power transmission mechanism 1 has general versatility. It is because, if the prime mover 103 is damaged, the power transmission mechanism 1 can be continuously used by replacing only the prime mover 103. That is, it is preferable to use the same power transmission mechanism 1 in the replacement prime mover 103 regardless whether the prime mover 103 is an engine or an electric motor. Moreover, it is preferable to use the same power transmission mechanism 1 in the prime movers (engines) 103 whose outputs are different from one another. This can be applied to a case of the prime mover (electric motor) 103. In order to improve general versatility, with the present embodiment, a configuration is adopted where, by removing the cover part 25, it is possible to replace the input shaft bearings 15, the prime mover side input shaft 5, the clutch plate 13, the prime mover (engine) 103 and the first gear 7. That is, by removing the cover part 25, it is possible to replace the cover part 25, and the input shaft bearing 15, the prime mover side input shaft 5, the clutch plate 13, the prime mover 103 and the first gear 7 which are parts associated with the cover part 25. Moreover, the first gear 7 can be replaced because the cover part 25 is removed, and therefore the first gear 7 is exposed.

With this configuration, the power transmission mechanism 1 can support the prime movers 103 with various characteristics, as described later. First, according to the characteristic of the replacement prime mover 103, the gear ratio between the first gear 7 and the second gear 5a in the power transmission mechanism 1 is selected. That is, the first gear 7 and the second gear 5a are selected based on the selected gear ratio. Then, in order to replace the first gear 7, the first gear 7 having coupled with the spline 9a in the shaft 9 is removed, and the selected first gear 7 for replacement is coupled with the spline 9a in the shaft 9. Then, the cover part 25 is mounted on the power transmission mechanism 1. In this state, the replacement prime mover 103 (the prime mover side input shaft 5) has been mounted on the cover part 25 having the selected second gear 5a. In this way, it is possible to replace the first gear 7 and the second gear 5a with respective ones selected to have the gear ratio suitable for the replacement prime mover 103. As described above, the power transmission mechanism 1 is applicable to prime movers such as an engine and an electric motor having various characteristics.

Although replacement of the prime mover 103 after the cultivator 101 is manufactured, has been described, the same applies to a case where, during manufacture, the power transmission mechanism 1 is assembled to be applicable to the intended prime mover 103. To be more specific, during manufacture, the first gear 7 suitable for the intended prime mover 103 is engaged with the spline 9a in the shaft 9. Then, the cover part 25 is mounted on the power transmission mechanism 1. In this state, the intended prime mover 103 (prime mover side input shaft 5) has been mounted on the cover part 25 having the second gear 5a suitable for the intended prime mover 103. In this way, the power transmission mechanism 1 according to the present embodiment is applicable to the prime mover 103 such as an engine or an electric motor having various characteristics. By this means, while the prime mover 103 can be replaced, the other body parts of the cultivator 101 can be used as is.

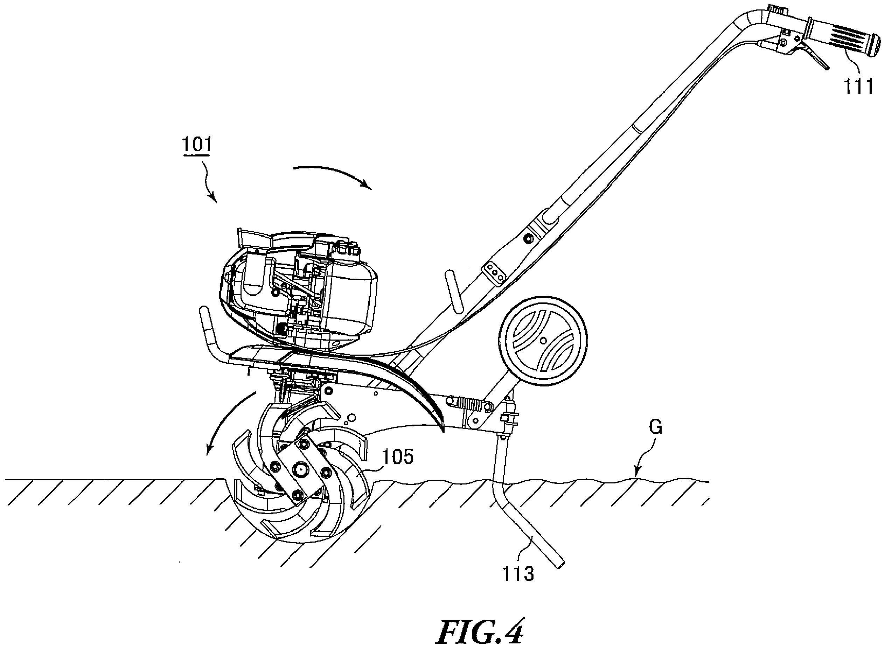

Fig. 4 is an exemplary drawing showing one scene in which the cultivator 101 is used.

As shown in Fig. 4, the cultivator 101 cultivates the ground G. In this case, the direction in which the tillage tine 105 rotates is counterclockwise in Fig. 4. That is, the rotation of the tillage tine 105 for cultivating causes the cultivator 101 to move forward. Therefore, while the stopper 113 is stuck into the ground G to prevent the cultivator 101 from moving forward, the depth to which the ground G is cultivated is adjusted. In order to prevent the cultivator 101 from moving forward and increase the depth to which the ground G is cultivated, it is preferable to increase the depth of the ground G into which the stopper 113 is stuck. In order to increase the depth of the ground G into which the stopper 113 is stuck, the user needs to push the operating part 111 down. Here, it is preferred for the user that the force required to push the operating part 111 down is small, taking into account the usability. Therefore, with the present embodiment, a configuration is adopted where the prime mover 103 is connected to the second gear 5a to place the prime mover 103 in the backward direction in which the operating part 111 and the stopper 113 are located. Here, there is no first gear 7 and second gear 5a in Patent Literature 1, it is not possible to provide this configuration. Then, by placing the prime mover 103 the backward direction, the center of gravity of the cultivator 101 is brought backward, and therefore the moment which tends to rotate backward is generated as shown in Fig. 4. This moment assists the user to stick the stopper 113 into the ground G. By this means, it is possible to improve the usability.

As described above, the center of gravity of the prime mover 103 which is the heaviest part in the cultivator 101 is located in the backward direction, the cultivator 101 is normally used in a posture in which the cultivator 101 is tilted back (hereinafter see Fig. 3). Therefore, during work, one side of the first accommodation space 3a including the second gear 5a is lower than the other side including the first gear 7. Then, there is lubricating oil such as grease in the first accommodation space 3a because the second gear 5a and the first gear 7 are accommodated in the first accommodation space 3a. Since the one side of the first accommodation space 3a including the second gear 5a is lower than the other side including the first gear 7, there is more lubricating oil in the one side including the second gear 5a side of the first accommodation space 3a than in the other side including the first gear 7. The penetrating path 3c is not formed in the one side including the second gear 5a. This prevents lubricating oil from leaking out to the second accommodation space 3b through the penetrating path 3c so that the lubricating oil in the first accommodation space 3a runs short. That is, with the configuration of the power transmission mechanism 1 according to the present embodiment, it is possible to produce an effect of preventing a shortage of the lubricating oil in the first accommodation space 3a in the power transmission mechanism 1.

### <The configurations and effects of the embodiment>

The power transmission mechanism 1 according to the present embodiment includes: the worm gear mechanism 27 including the worm wheel 11 and the worm gear 9b; the shaft 9 that extends in the vertical direction and has the worm gear 9b in the lower part; the first gear 7 located in the upper direction of the shaft 9; and the second gear 5a that can engage with the first gear 7. The second gear 5a is configured to be able to connect to the shaft (prime mover side input shaft 5) of the prime mover 103. With this configuration, it is possible to replace the second gear 5a and the first gear 7 with respective ones selected to have the gear ratio suitable for the replacement prime mover 103. In addition, with this configuration, the power transmission mechanism 1 according to the present embodiment is applicable to prime movers such as an engine and an electric motor having various characteristics.

With respect to the shaft 9, the second gear 5a is arranged in the same side as the side in which the worm wheel 11 is formed. This configuration assists the user to stick the stopper 113 into the ground G. By this means, it is possible to produce an effect of improving the usability.

The power transmission mechanism 1 according to the present embodiment has the first accommodation space 3a to accommodate the first gear 7 and the second gear 5a, and the second accommodation space 3b to accommodate the worm gear mechanism 27. In addition, the penetrating path 3c that penetrates the first accommodation space 3a and the second accommodation space 3b and contains the shaft 9, is formed in the first accommodation space 3a in the first gear 7 side. By contrast with this, there is no penetrating structure that penetrates the first accommodation space 3a and the second accommodation space 3b in the first accommodation space 3a in the second gear 5a side. That is, with this configuration, it is possible to produce an effect of preventing a shortage of the lubricating oil in the first accommodation space 3a.

The cover part 25 is removably formed on the first accommodation space 3a, and at least the first gear 7 can be removed in the direction of the cover part 25. With this configuration, it is possible to easily replace the first gear 7 and the second gear 5a with respective ones selected to have the gear ratio suitable for the replacement prime mover 103. Moreover, with this configuration, the power transmission mechanism according to the present embodiment is easily applicable to prime movers such as an engine and an electric motor having various characteristics.

The present invention is not limited to the above-described embodiment, but various modifications of the structure, the configuration and the control are possible.

## Claims

1. A power transmission mechanism (1), comprising:
a worm gear mechanism (27) including a worm wheel (11) and a worm gear (9b);
a shaft (9) extending in a vertical direction and having the worm gear (9b) in a lower part;
a first gear (7) located in an upper direction of the shaft (9); and
a second gear (5a) configured to be able to engage with the first gear (7) and connect to a shaft of a prime mover (103).

2. The power transmission mechanism (1) according to claim 1, wherein, with respect to the shaft (9), the second gear (5a) is arranged in a same side as a side in which the worm wheel (11) is formed.

3. The power transmission mechanism (1) according to claim 1, further comprising:
a first accommodation space (3a) to accommodate the first gear (7) and the second gear (5a); and
a second accommodation space (3b) to accommodate the worm gear mechanism (27), wherein:
a penetrating path (3c) configured to penetrate the first accommodation space (3a) and the second accommodation space (3b) and contain the shaft (9), is formed in the first accommodation space (3a) in the first gear (7) side; and
there is no penetrating structure configured to penetrate the first accommodation space (3a) and the second accommodation space (3b) in the first accommodation space (3a) in the second gear (5a) side.

4. The power transmission mechanism (1) according to claim 2, further comprising a cover part (25) removably formed on the first accommodation space (3a),
wherein at least the first gear (7) is configured to be removable in a direction of the cover part (25).
